# EUROPEAN PATENT APPLICATION

(11) **EP 4 715 661 A1**
(43) Date of publication of application: **25.03.2026**
(21) Application number: 25201566.4
(22) Date of filing: 11.09.2025
(51) Int. Cl.: G06F 40/157, G06F 40/216, G06F 40/30, G06F 40/35, G06Q 20/38

(54) **METHODS AND SYSTEMS FOR PREDICTING AN UPCOMING DATA POINT ASSOCIATED WITH AN ENTITY**

(30) Priority: 23.09.2024 US 202418893242
(71) Applicant: Mastercard International, Inc., Purchase, NY 10577 (US)
(72) Inventor: Harshavardhan, Etcherla, Srikakulam (IN); Choudhary, Hariom, Indore (IN); Pujari, Sarthak, Sambalpur (IN); Katyal, Yatin, Rohtak (IN); Powar, Suhas, Kolhapur (IN); Shrivastava, Diksha, Indore (IN)
(74) Representative: Barker Brettell LLP

(57) **Abstract**

Methods and systems for predicting an upcoming data point are disclosed. Method performed by a server system includes accessing a plurality of encoded features associated with each data point of a plurality of data points corresponding to an entity. Method includes generating a data point word representation for the entity based on the plurality of encoded features associated with each data point. The data point word representation includes one or more words. Method includes generating a data point sentence representation based on the one or more words associated with each data point. Method includes generating, by a Large Language Model (LLM), an upcoming data point representation in the data point sentence representation based on the data point sentence representation. Method includes decoding the upcoming data point representation to obtain one or more features associated with an upcoming data point based on the set of predefined language rules.

## Description

### TECHNICAL FIELD

The present disclosure relates to a field of artificial intelligence-based processing systems and, more particularly, to electronic methods and complex processing systems that use Generative Artificial Intelligence (AI) to predict upcoming data points based on historical data points associated with an entity.

### BACKGROUND

Nowadays, Generative Artificial Intelligence (AI) using Large Language Models (LLMs) has gained significant popularity across various industries, such as finance, healthcare, marketing, entertainment, *etc.* LLMs are capable of generating human-like text, making them crucial for tasks involving language data such as Natural Language Processing (NLP), text completion, translation, and content generation. LLMs are known for their high speed, performance, and ease of use. However, despite their capabilities, LLMs have limited applicability in tasks where these models have to operate on other forms of data apart from language data, particularly tabular data. As may be understood, tabular data such as transaction data, healthcare or patient data, sales data, *etc.,* among other structured datasets is the most common form of data available to the various industries. Thus, tabular data is critical for various business processes. Tabular data is essential for business processes such as operations, analytics, and decision-making.

However, applying LLMs to tabular data for generating predictions poses significant challenges. One of the primary issues is the explosion of vocabulary that occurs when LLMs are trained on tabular datasets. The term 'vocabulary explosion' refers to the rapid and uncontrolled increase in the number of unique terms that a model needs to understand and process. In language data, the vocabulary is often limited to words, phrases, and syntax rules, which are manageable by LLMs. However, tabular data encompasses a wide variety of unique information across multiple data fields associated with different data points, leading to a vast and complex vocabulary. For example, tabular data for transactions performed by a cardholder includes various transactions (*i.e.,* data points), each of which is associated with different transaction attributes (present within different data fields). For instance, transaction attributes may include cardholder identifier (ID), merchant ID, Card Present (CP) or Card Not Present (CNP) indicators, Fraud or Non-Fraud indicators, and so on. Since a Fintech organization may need to analyze billions of transactions performed by millions of cardholders if LLMs are utilized for this operation, they will suffer from vocabulary explosion due to the sheer number of the unique number of fields in such tabular data.

This increase in vocabulary size has several adverse effects. Firstly, it significantly increases the computational resources required for training and inferencing by the LLM, making the process inefficient and resource expensive. Secondly, it hampers the model's ability to generalize from the data, as the presence of numerous unique fields can lead to overfitting and reduced predictive accuracy. Lastly, managing and updating such a large vocabulary becomes impractical, especially in real-time applications where data is continuously generated and needs immediate processing. In other words, this significant increase impacts resource utilization, requiring more memory and computational power to store and manage the vocabulary. Additionally, the number of parameters within the model increases, necessitating more complex computations and longer training times. Consequently, the application of LLMs to predict upcoming data points or trends within tabular data remains unfeasible.

To this end, there exists a technological need for a solution for predicting upcoming data points based on historical data points associated with an entity.

### SUMMARY

There exists a need for techniques to overcome one or more limitations stated above such as poor resource utilization, requiring more memory and computational power to store and manage the vocabulary, and so on. Various embodiments of the present disclosure provide methods and systems for predicting upcoming data points based on historical data points associated with an entity.

To achieve the above and other objectives of the present disclosure, in one embodiment, a computer-implemented method for predicting an upcoming data point associated with an entity is disclosed. The computer-implemented method performed by a server system includes accessing a plurality of encoded features associated with each data point of a plurality of data points corresponding to the entity from a database associated with the server system. The computer-implemented method further includes generating a data point word representation for the entity based, at least in part, on the plurality of encoded features associated with each data point. Herein, the data point word representation includes one or more words. The computer-implemented method further includes generating a data point sentence representation based, at least in part, on the one or more words associated with each data point. The computer-implemented method further includes generating, by a Large Language Model (LLM) associated with the server system, an upcoming data point representation in the data point sentence representation based, at least in part, on the data point sentence representation being applied to the LLM. The computer-implemented method further includes decoding the upcoming data point representation to obtain one or more features associated with an upcoming data point based, at least in part, on the set of predefined language rules.

In another embodiment, a server system is disclosed. The server system includes a communication interface and a memory including executable instructions. The server system also includes a processor communicably coupled to the memory. The processor is configured to execute the instructions to cause the server system, at least in part, to access a plurality of encoded features associated with each data point of a plurality of data points corresponding to an entity from a database associated with the server system. Further, the server system is caused to generate a data point word representation for the entity based, at least in part, on the plurality of encoded features associated with each data point. Herein, the data point word representation includes one or more words. Further, the server system is caused to generate a data point sentence representation based, at least in part, on the one or more words associated with each data point. Further, the server system is caused to generate, by a Large Language Model (LLM) associated with the server system, an upcoming data point representation in the data point sentence representation based, at least in part, on the data point sentence representation being applied to the LLM. Further, the server system is caused to decode the upcoming data point representation to obtain one or more features associated with an upcoming data point based, at least in part, on the set of predefined language rules.

In yet another embodiment, a non-transitory computer-readable storage medium is disclosed. The non-transitory computer-readable storage medium includes computer-executable instructions that, when executed by at least a processor of a server system, cause the server system to perform a method. The method includes accessing a plurality of encoded features associated with each data point of a plurality of data points corresponding to an entity from a database associated with the server system. The method further includes generating a data point word representation for the entity based, at least in part, on the plurality of encoded features associated with each data point. Herein, the data point word representation includes one or more words. The method further includes generating a data point sentence representation based, at least in part, on the one or more words associated with each data point. The method further includes generating, by a Large Language Model (LLM) associated with the server system, an upcoming data point representation in the data point sentence representation based, at least in part, on the data point sentence representation being applied to the LLM. The method further includes decoding the upcoming data point representation to obtain one or more features associated with an upcoming data point based, at least in part, on the set of predefined language rules.

In another embodiment, a computer-implemented method is disclosed. The computer-implemented method performed by a server system includes accessing a plurality of encoded features associated with each transaction of a plurality of transactions performed by a cardholder from a database associated with the server system. The computer-implemented method further includes generating a transaction word representation for the cardholder based, at least in part, on the plurality of encoded features associated with each transaction, wherein the transaction word representation includes one or more words. The computer-implemented method further includes generating a transaction sentence representation based, at least in part, on the one or more words associated with each transaction. The computer-implemented method further includes generating, by a Large Language Model (LLM) associated with the server system, an upcoming transaction representation in the transaction sentence representation based, at least in part, on the transaction sentence representation being applied to the LLM. The computer-implemented method further includes decoding the upcoming transaction representation to obtain one or more features associated with an upcoming transaction based, at least in part, on the set of predefined language rules.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE FIGURES

For a more complete understanding of example embodiments of the present technology, reference is now made to the following descriptions taken in connection with the accompanying drawings in which:
FIG. 1 illustrates a representation of an environment related to at least some example embodiments of the present disclosure;
FIG. 2 illustrates a simplified block diagram of a server system, in accordance with an embodiment of the present disclosure;
FIG. 3 illustrates a schematic representation of an architecture of a LLM model, in accordance with an embodiment of the present disclosure;
FIG. 4 illustrates a schematic representation of another environment related to at least some example embodiments of the present disclosure;
FIG. 5 illustrates a schematic representation of yet another environment related to at least some example embodiments of the present disclosure;
FIG. 6 illustrates a block diagram for predicting one or more features related to an upcoming data point associated with an entity, in accordance with an embodiment of the present disclosure;
FIG. 7 illustrates a process flow diagram depicting a method for predicting an upcoming data point associated with the entity, in accordance with an embodiment of the present disclosure; and
FIG. 8 illustrates a process flow diagram depicting a method for predicting one or more features associated with an upcoming transaction by the cardholder, in accordance with an embodiment of the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details.

Reference in this specification to "one embodiment" or "an embodiment" means that a particular feature, structure, or characteristic described in connection with the embodiment is included in at least one embodiment of the present disclosure. The appearance of the phrase "in an embodiment" in various places in the specification is not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

Embodiments of the present disclosure may be embodied as an apparatus, a system, a method, or a computer program product. Accordingly, embodiments of the present disclosure may take the form of an entirely hardware embodiment, an entirely software embodiment (including firmware, resident software, micro-code, *etc.*)*,* or an embodiment combining software and hardware aspects that may all generally be referred to herein as a "circuit", "engine", "module", or "system". Furthermore, aspects of the present disclosure may take the form of a computer program product embodied in one or more computer-readable storage media having computer-readable program code embodied thereon.

The terms "account holder", "user", "cardholder", "consumer", and "buyer" are used interchangeably throughout the description and refer to a person who has a payment account or a payment card (*e.g.,* credit card, debit card, *etc*.) associated with the payment account, that will be used by them at a merchant to perform a payment transaction. The payment account may be opened via an issuing bank or an issuer server.

The term "merchant", used throughout the description generally refers to a seller, a retailer, a purchase location, an organization, or any other entity that is in the business of selling goods or providing services, and it can refer to either a single business location or a chain of business locations of the same entity.

The terms "payment network" and "card network" are used interchangeably throughout the description and refer to a network or collection of systems used for the transfer of funds through the use of cash substitutes. Payment networks may use a variety of protocols and procedures in order to process the transfer of money for various types of transactions. Payment networks are companies that connect an issuing bank with an acquiring bank to facilitate online payment. Transactions that may be performed via a payment network may include product or service purchases, credit purchases, debit transactions, fund transfers, account withdrawals, *etc.* Payment networks may be configured to perform transactions via cash substitutes that may include payment cards, letters of credit, checks, financial accounts, *etc.* Examples of networks or systems configured to perform or function as payment networks include those operated by payment processors.

The term "payment card", used throughout the description, refers to a physical or virtual card linked with a financial or payment account that may be presented to a merchant or any such facility to fund a financial transaction via the associated payment account. Examples of the payment card include, but are not limited to, debit cards, credit cards, prepaid cards, virtual payment numbers, virtual card numbers, forex cards, charge cards, e-wallet cards, and stored-value cards. The payment card may be a physical card that may be presented to the merchant for funding the payment. Alternatively, or additionally, the payment card may be embodied in the form of data stored in a user device, where the data is associated with a payment account such that the data can be used to process the financial transaction between the payment account and a merchant's financial account.

The term "payment account", used throughout the description refers to a financial account that is used to fund a financial transaction. Examples of the financial account include, but are not limited to, a savings account, a credit account, a checking account, and a virtual payment account. The financial account may be associated with an entity such as an individual person, a family, a commercial entity, a company, a corporation, a governmental entity, a non-profit organization, and the like. In some scenarios, the financial account may be a virtual or temporary payment account that can be mapped or linked to a primary financial account, such as those accounts managed by payment wallet service providers, and the like.

The terms "payment transaction", "financial transaction", "event", and "transaction" are used interchangeably throughout the description and refer to a transaction or transfer of payment of a certain amount being initiated by the cardholder. More specifically, they refer to electronic financial transactions including, for example, online payment, payment at a terminal (*e*.*g*., Point Of Sale (POS) terminal), and the like. Generally, a payment transaction is performed between two entities, such as a buyer and a seller. It is to be noted that a payment transaction is followed by a payment transfer of a transaction amount (*i.e.,* monetary value) from one entity (*e*.*g*., issuing bank associated with the buyer) to another entity (*e*.*g*., acquiring bank associated with the seller), in exchange of any goods or services.

### OVERVIEW

Various embodiments of the present disclosure provide methods, systems, user devices, and computer program products for predicting upcoming data points based on historical data points associated with an entity. The present disclosure describes a server system that is configured to access a plurality of encoded features associated with each data point of a plurality of data points corresponding to an entity from a database associated with the server system. In a non-limiting implementation, for accessing the plurality of encoded features, the server system is configured to access a historical tabular dataset from the database. The historical tabular dataset may include the plurality of data points corresponding to the entity. Each data point is associated with a plurality of data fields. The server system may further generate a plurality of features for each data point based, at least in part, on the plurality of data fields associated with each data point. Finally, the server system may encode the plurality of features of each data point based, at least in part, on a set of predefined language rules. As a result, the plurality of encoded features may be generated and stored in the database which are accessible for future use.

In one embodiment, the server system is configured to generate a data point word representation for the entity based, at least in part, on the plurality of encoded features associated with each data point. Herein, the data point word representation includes one or more words. The server system may further generate a data point sentence representation based, at least in part, on the one or more words associated with each data point. In a non-limiting example, each word is generated for each data point with the corresponding plurality of encoded features. Moreover, each word includes a first portion indicating a position of each of the corresponding encoded features in the word and a second portion indicating the value of each of the corresponding encoded features. The first portion and the second portion are separated by a first special symbol such that different encoded features of each data point in the word are separated from each other using a second special symbol. In another embodiment, the one or more words associated with each data point are separated from each other in the data point sentence representation using a third special symbol.

Further, the server system may generate an upcoming data point representation in the data point sentence representation based, at least in part, on the data point sentence representation being applied to a Large Language Model (LLM) associated with the server system. Thus, it may be understood that, in an embodiment, the server system generates the upcoming data point representation using the LLM. Lastly, the server system may decode the upcoming data point representation to obtain one or more features associated with an upcoming data point based, at least in part, on the set of predefined language rules.

In a non-limiting implementation, the server system is configured to train the LLM prior to using the LLM for generating the upcoming data point representation. Prior to training the LLM, the server system may be configured to access a training dataset from the database. The training dataset may include a plurality of test data fields associated with a plurality of test data points corresponding to a plurality of entities. Further, the server system may generate a plurality of features for each entity based, at least in part, on the plurality of test data fields associated with each test data point. The server system may encode the plurality of features for each entity based, at least in part, on the set of predefined language rules. The server system may then generate a plurality of data point word representations for the plurality of entities based, at least in part, on the plurality of encoded features for each entity. Herein, each data point word representation may include at least one word. In an embodiment, the server system may generate a plurality of data point sentence representations based, at least in part, on the at least one word associated with each test data point of each entity. Herein, each data point sentence representation may indicate a sequence of data points associated with each entity. Further, the server system may tokenize the plurality of data point sentence representations into a plurality of data point token representations. Herein, each data point token representation may include a token sequence. Finally, the server system may train the LLM based, at least in part, on the plurality of data point sentence representations.

In a specific embodiment, to train the LLM, the server system is configured to iteratively perform the following steps till predefined criteria are met. The steps include: (i) initializing the LLM based, at least in part, on one or more hyper parameters; (ii) determining, by the LLM, an upcoming token in the token sequence based, at least in part, on the plurality of data point sentence representations; (iii) computing, using one or more loss functions, one or more loss values based, at least in part, on comparing the upcoming token and a ground truth token present in the training dataset; and (iv) optimizing the one or more hyper parameters of the LLM based, at least in part, on back-propagating the one or more loss values.

Upon training the LLM, to generate the upcoming data point representation, the server system, in a specific embodiment, is configured to tokenize the data point sentence representation into a data point token representation. Herein, the data point token representation is a token sequence. More specifically, to tokenize the data point sentence representation into the data point token representation, the server system may initialize a tokenization process with the one or more words associated with each data point for the data point sentence representation. Further, the server system may compute a word frequency count for each word in the data point sentence representation. Lastly, the server system may perform, the following steps, iteratively till a desired vocabulary size is achieved. The steps include: (i) detecting most frequent pairs of consecutive words in the data point sentence representation; (ii) merging the most frequent pairs to generate a new word within the data point sentence representation; (iii) updating the word frequency count for the data point sentence representation; and (iv) computing a vocabulary size based, at least in part, on a word count of the data point sentence representation.

Further, the server system may generate an upcoming data point token in the token sequence based, at least in part, on applying the data point token representation to the LLM. Herein, it may be understood that the server system has generated the upcoming data point token in the token sequence using the LLM. Lastly, the server system may de-tokenize the upcoming data point token into the upcoming data point representation.

In a specific embodiment, the server system may be embodied within a payment server associated with a payment network. In such an embodiment, the server system is configured to access a plurality of encoded features associated with each transaction of a plurality of transactions performed by a cardholder from the database associated with the server system. The server system may generate a transaction word representation for the cardholder based, at least in part, on the plurality of encoded features associated with each transaction. Herein, the transaction word representation may include one or more words. Further, the server system may generate a transaction sentence representation based, at least in part, on the one or more words associated with each transaction. Furthermore, the server system may generate an upcoming transaction representation in the transaction sentence representation based, at least in part, on the transaction sentence representation being applied to a Large Language Model (LLM) associated with the server system. As may be understood, the server system may generate the upcoming transaction representation using the LLM.

More specifically, in a non-limiting implementation, for generating the upcoming transaction representation, the server system may tokenize the transaction sentence representation into a transaction token representation. Herein, the transaction token representation is a token sequence. Further, the server system may generate an upcoming transaction token in the token sequence based, at least in part, on applying the transaction token representation to the LLM. It may be understandable that the server system generates the upcoming transaction token using the LLM. Furthermore, the server system may de-tokenize the upcoming transaction token into the upcoming transaction representation. Lastly, in an embodiment, the server system is configured to decode the upcoming transaction representation to obtain one or more features associated with an upcoming transaction based, at least in part, on a set of predefined language rules.

The various embodiments of the present disclosure provide multiple advantages and technical effects while addressing technical problems such as how to solve the vocabulary explosion problem, how to create a minimal vocabulary needed to cover all data fields for all data points, and how to reduce training and deployment time.

As may be appreciated, by converting tabular data into words and sentences, the overall complexity of the data is reduced which makes it easier for the LLM to understand the underlying patterns in the tabular data. More specifically, converting the tabular data into this language form, which is natively easier for the LLM to understand, improves the accuracy of the predictions. Further, training the LLM from the ground up using this language, improves its capabilities as well. In other words, building the LLM using this language-converted tabular data helps the learning of the model. Additionally, relying on the set of predefined language rules, ensures that features are uniformly encoded for specific tabular data. This ensures uniformity in the language thus produced. The presence of the first special symbol helps the LLM in identifying the importance of the position of each encoded feature in this new language, which in turn helps to create a better understanding of positional encodings by the LLM. Similarly, the second and third special symbols help the LLM understand the distinction between different data fields and data points, respectively. The tokenization process described herein also improves the performance of the LLM by restricting the vocabulary of the model to a desired size, which in turn reduces the computational requirements of the LLM during its operation.

In a non-limiting example, the one or more features of an upcoming data point that are predicted by the LLM can be used for various applications as well. In one instance, if the tabular data is transactional data, then one or more features of a future or upcoming transaction can be predicted by the LLM. These predicted features can then be fed to a classifier ML model for performing various downstream tasks such as fraud prediction, and so on. Similarly, in another instance, if the tabular data is patient symptom data, then one or more features of the future or upcoming symptoms of a patient can be predicted by the LLM. These predicted features can then be fed to a classifier ML model for performing various downstream tasks such as disease detection, cancer prediction, recovery period prediction, and so on.

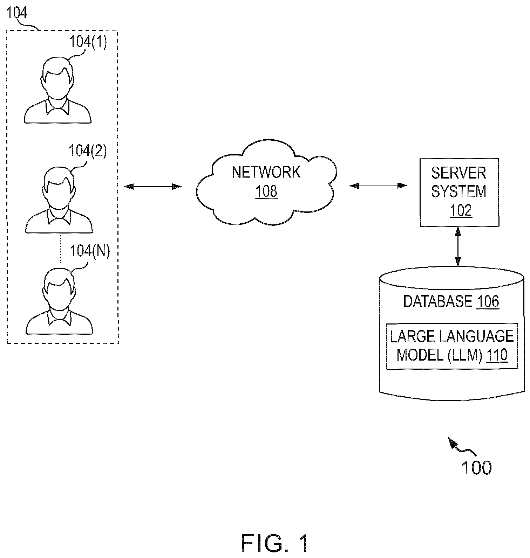

Various embodiments of the present disclosure are described hereinafter with reference to FIGS. 1 to 8.

FIG. 1 illustrates a schematic representation of an environment 100 related to at least some example embodiments of the present disclosure. Although the environment 100 is presented in one arrangement, other embodiments may include the parts of the environment 100 (or other parts) arranged otherwise depending on, for example, predicting one or more features related to an upcoming data point associated with an entity, and the like.

The environment 100 generally includes a plurality of parties, such as a server system 102, a plurality of entities 104(1), 104(2), ... 104(N) (collectively referred to hereinafter as the 'plurality of entities 104' or simply, 'entities 104'), a database 106, each coupled to, and in communication with (and/or with access to) a network 108.

As described earlier, applying LLMs to tabular data for generating predictions poses significant challenges. One of the primary issues is the explosion of vocabulary that occurs when LLMs are trained on tabular datasets. This problem leads to a significant impact on the resource utilization of the LLM, requiring more memory and computational power to store and manage the vocabulary. Additionally, the number of parameters within the model increases, necessitating more complex computations and longer training times. Consequently, the application of LLMs to predict upcoming data points or trends within tabular data remains unfeasible.

Therefore, the above-mentioned technical problems, among other problems, are addressed by one or more embodiments implemented by the server system 102 and the methods thereof provided in the present disclosure. It should be noted that the server system 102 is configured to predict one or more features related to an upcoming data point related to an entity such as the entity 104(1) for performing a prediction related to a down-stream task.

In one embodiment, the server system 102 may be used by a managing entity (not shown) to train and operate an LLM such as an LLM 110 to predict one or more features related to an upcoming data point. These features can then be utilized to perform predictions for a downstream task. In a non-limiting implementation, the managing entity may be any individual, representative of a person, an institution, an organization, a corporate entity, a non-profit organization, a financial institution, a bank, medical facilities (*e*.*g*., hospitals, laboratories, *etc*.), educational institutions, government agencies, telecom industries, or the like. In an example, the managing entity may be an administrator of the server system 102.

Examples of the downstream task may include, but are not limited to, speech recognition, image classification, email spam detection, performing medical diagnosis, fraud detection, risk management, charge-back decision-making systems, payment authorization systems, data analytics, credit card scoring systems, cross-border transaction management systems, consumer segmenting, or the like.

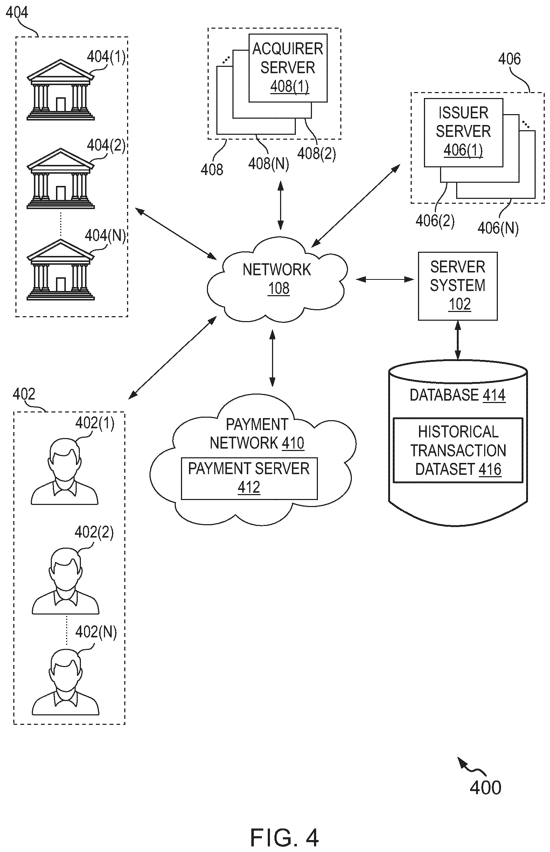

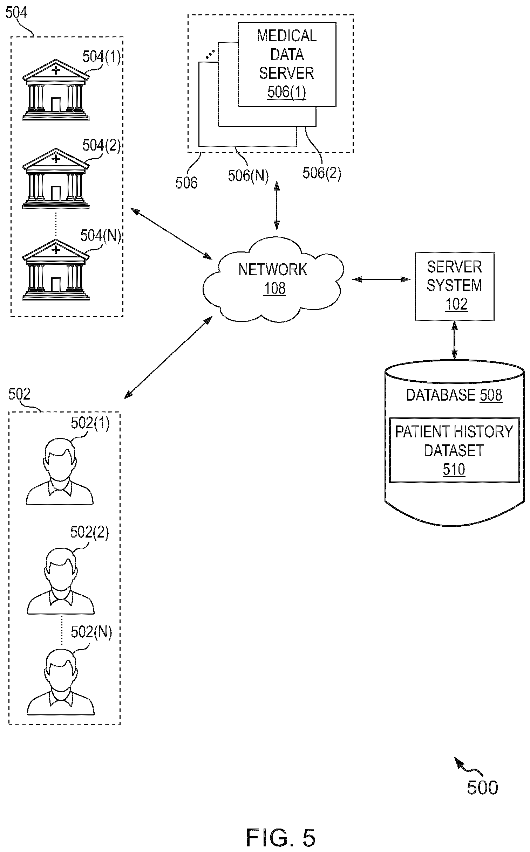

In another embodiment, the entities (*e*.*g*., the entities 104) may correspond to individuals whose data is used for training the LLM 110 for predicting an upcoming data point associated with any of the entities 104. For instance, the entities 104 may be patients who are undergoing treatment for certain diseases (as described in FIG. 5). Data generated corresponding to such patients can be used to learn and understand the experience of the patients at a particular clinical center by the LLM 110. However, since this data is generally tabular in nature, it is quite complicated to train the LLM 110 due to the possibility of vocabulary explosion. In another instance, within the payment industry (as shown in FIG. 4), the entities 104 may be cardholders, account holders, merchants, consumers, issuers, acquirers, banks, third-party users, financial institutions, or the like. Tabular data related to such individuals include historical financial transaction-related data, income-related data, expenditure-related data, and the like. As may be understood, tabular data is a type of data that is organized in a table format, where each row represents an individual record or instance, and each column represents a feature or attribute of that record. Each row can be called a data point and each column can be called a data field. In other words, tabular data is made up of a plurality of data points, each of which is associated with a plurality of data fields.

In some embodiments, the entities 104 may use their corresponding electronic devices (not shown in figures) to access a mobile application or a website associated with the issuing bank, or any third-party payment application to perform a payment transaction. In various non-limiting examples, the electronic devices may refer to any electronic devices, such as, but not limited to, Personal Computers (PCs), tablet devices, smart wearable devices, Personal Digital Assistants (PDAs), voice-activated assistants, Virtual Reality (VR) devices, smartphones, laptops, and the like.

The network 108 may include, without limitation, a Light Fidelity (Li-Fi) network, a Local Area Network (LAN), a Wide Area Network (WAN), a Metropolitan Area Network (MAN), a satellite network, the Internet, a fiber optic network, a coaxial cable network, an infrared (IR) network, a Radio Frequency (RF) network, a virtual network, and/or another suitable public and/or private network capable of supporting communication among two or more of the parts or users 104 illustrated in FIG. 1, or any combination thereof.

Various entities in the environment 100 may connect to the network 108 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, New Radio (NR) communication protocol, any future communication protocol, or any combination thereof. In some instances, the network 108 may utilize a secure protocol (*e*.*g*., Hypertext Transfer Protocol (HTTP), Secure Socket Lock (SSL), and/or any other protocol, or set of protocols for communicating with the various entities depicted in FIG. 1.

In a specific embodiment, the server system 102 may facilitate the managing entity to determine an upcoming or future data point for the entity 104(1) using the LLM 110. In an embodiment, the server system 102 may be coupled to the database 106. In one embodiment, the database 106 may be incorporated in the server system 102 or maybe an individual entity connected to the server system 102 or maybe a database stored in cloud storage. In various non-limiting examples, the database 106 may include one or more Hard Disk Drives (HDD), Solid-State Drives (SSD), an Advanced Technology Attachment (ATA) adapter, a Serial ATA (SATA) adapter, a Small Computer System Interface (SCSI) adapter, a redundant array of independent disks (RAID) controller, a Storage Area Network (SAN) adapter, a network adapter, and/or any component providing the server system 102 with access to the database 106. In one implementation, the database 106 may be viewed, accessed, amended, updated, and/or deleted by an administrator (not shown) associated with the server system 102 through a database management system (DBMS) or Relational DBMS (RDBMS) present within the database 106.

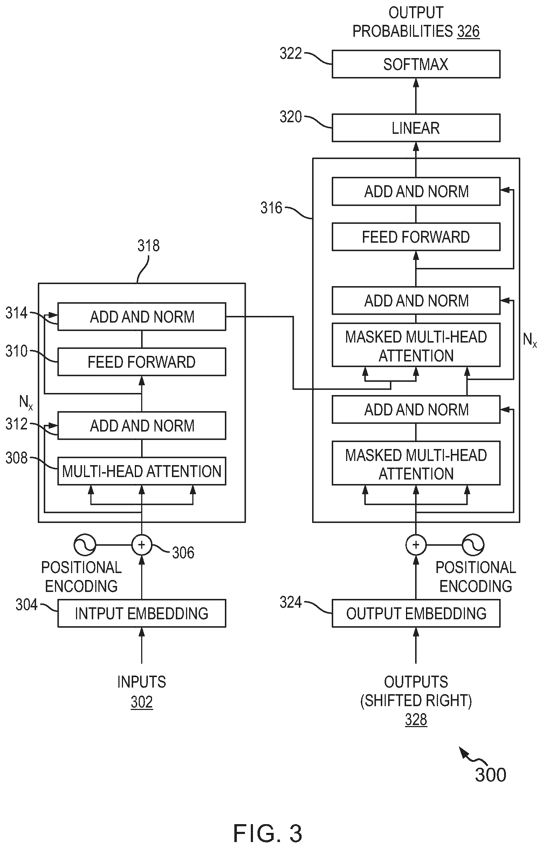

In an embodiment, the database 106 may store the LLM 110. As may be understood, LLM 110 is an Artificial Intelligence (AI) system designed to perform sophisticated Natural Language Processing (NLP) tasks. These models leverage deep learning techniques and vast amounts of textual data to understand, generate, and manipulate human language. The LLM 110 is based on a transformer architecture, which consists of multiple stacked layers of self-attention mechanisms and feed-forward neural networks. The architecture of the LLM 110 has been described later in the present disclosure with reference to FIG. 3.

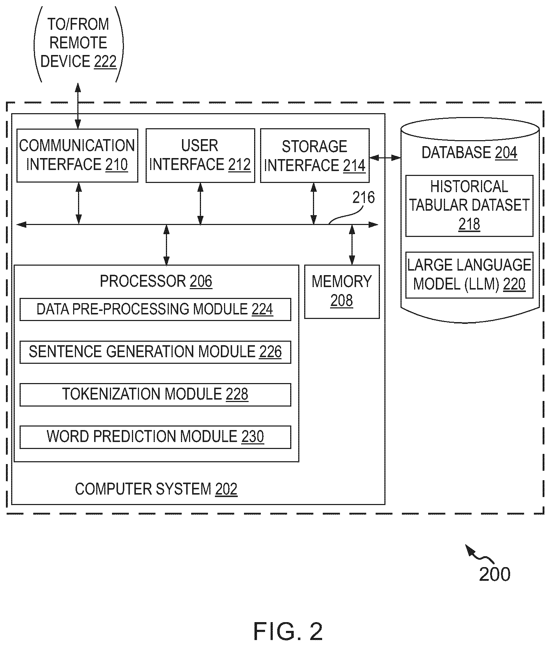

In an embodiment, the server system 102 is configured to access a plurality of encoded features associated with each data point of a plurality of data points corresponding to the entity 104(1) from the database 106. In an instance, the plurality of encoded features may be generated using the plurality of fields associated with each data point. Then, the server system 102 is configured to generate a data point word representation for the entity 104(1) based, at least in part, on the plurality of encoded features associated with each data point. Herein, the data point word representation includes one or more words. In particular, each data point is represented using a word made of its encoded features. These words contain the information related to the encoded features in a special format. This special format is defined by a set of predefined language rules. This set of predefined language rules is defined by the managing entity such that it provides a uniform method of converting features into words. This aspect has been described later in detail with reference to FIG. 2.

Then, the server system 102 is configured to generate a data point sentence representation based, at least in part, on the one or more words associated with each data point. In other words, the various words related to different data points are combined to create a sentence. This sentence essentially describes all the data points related to the entity 104(1) using different words.

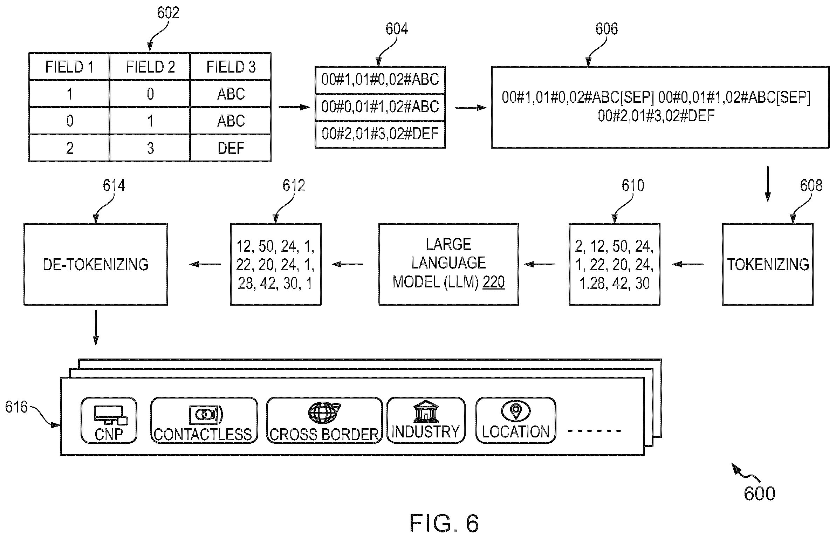

Then, the server system 102 is configured to generate, by the LLM 110, an upcoming data point representation in the data point sentence representation based, at least in part, on the data point sentence representation being applied to the LLM 110. As may be understood, LLMs specialize in predicting a response to an input query. If the data point sentence representation is fed to the LLM 110 to find the next word in the said data point sentence representation (*i*.*e*., a query), the LLM 110 can predict the next word using probabilistic techniques. As may be appreciated, since words and sentences are used as input to the LLM 110 instead of the tabular data, the problem of vocabulary explosion can be avoided. This aspect has been described in detail later with reference to FIG. 3 and FIG. 6. Thereafter, the server system 102 is configured to decode the upcoming data point representation to obtain one or more features associated with an upcoming data point based, at least in part, on the set of predefined language rules. These one or more features may then be utilized by any downstream model to perform a downstream task such as fraud detection, disease detection, and so on. It may be noted that the methods and systems proposed in the present disclosure can be used in any domain or industry to perform any downstream tasks. The industries may include healthcare, retail, media, travel, crime detection, financial industry, and the like.

It should be understood that the server system 102 is a separate part of the environment 100, and may operate apart from (but still in communication with, for example, via the network 108) any third-party external servers (to access data such as the training datasets to perform the various operations described herein). However, in other embodiments, the server system 102 may be incorporated, in whole or in part, into one or more parts of the environment 100.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices are shown in FIG. 1 may be implemented within a single system or device, or a single system or device is shown in FIG. 1 may be implemented as multiple, distributed systems or devices. In addition, the server system 102 should be understood to be embodied in at least one computing device in communication with the network 108, which may be specifically configured, via executable instructions, to perform steps as described herein, and/or embodied in at least one non-transitory computer-readable media.

FIG. 2 illustrates a simplified block diagram of a server system 200, in accordance with an embodiment of the present disclosure. The server system 200 is identical to the server system 102 of FIG. 1. In some embodiments, the server system 200 is embodied as a cloud-based and/or Software as a Service (SaaS)-based architecture.

The server system 200 includes a computer system 202 and a database 204. The computer system 202 includes at least one processor 206 (herein, referred to interchangeably as 'processor 206') for executing instructions, a memory 208, a communication interface 210, a user interface 212, and a storage interface 214. One or more components of the computer system 202 communicate with each other via a bus 216. The components of the server system 200 provided herein may not be exhaustive and the server system 200 may include more or fewer components than those depicted in FIG. 2. Further, two or more components depicted in FIG. 2 may be embodied in one single component, and/or one component may be configured using multiple sub-components to achieve the desired functionalities.

In some embodiments, the database 204 is integrated into the computer system 202. In one embodiment, the database 204 is substantially similar to the database 106 of FIG. 1. In one non-limiting example, the database 204 is configured to store a historical tabular dataset 218, a Large Language Model (LLM) 220, and the like. Herein, the LLM 220 is identical to the LLM 110 of FIG. 1.

In a non-limiting example, the historical tabular dataset 218 includes a plurality of data points corresponding to an entity such as the entity 104(1). Each data point is associated with a plurality of data fields. The historical tabular dataset 218 is an example of tabular data. Each data points to a row and each data field corresponds to a column in the tabular data. For example, in a transaction dataset, transactions associated with a cardholder are stored along with the transaction attributes of each transaction. In this example, each row can represent an individual transaction from a plurality of transactions and each column represents an individual transaction attribute (or feature, in some instances) corresponding to the said individual transaction. Thus, a transaction can be a data point with data fields including the transaction attributes. In an example, the historical tabular dataset 218 stores the plurality of data points with their corresponding data fields over a historical period such as a month, six months, a year, and so on. As used herein, the terms 'data point', 'data sample', and 'observation', may be used interchangeably, and refer to a single instance or observation within the dataset.

In a non-limiting example, the LLM 220 is a transformer-based Machine Learning (ML) model. Examples of LLM 220 may include, but are not limited to, Generative Pre-trained Transformer (GPT), Bidirectional Encoder Representations from Transformer (BERT), Text-to-Text Transfer Transformer (T5), Robustly Optimized BERT (ROBERTA), and so on. The architecture, training, and operation of the LLM 220 have been described later in the present disclosure. The architecture of the LLM 220 is described later in the present disclosure with reference to FIG. 3.

Further, the computer system 202 may include one or more hard disk drives as the database 204. The user interface 212 is an interface, such as a Human Machine Interface (HMI) or a software application that allows the entities 104 such as an administrator to interact with and control the server system 200 or one or more parameters associated with the server system 200. It may be noted that the user interface 212 may be composed of several components that vary based on the complexity and purpose of the application. Examples of components of the user interface 212 may include visual elements, controls, navigation, feedback and alerts, user input and interaction, responsive design, user assistance and help, accessibility features, and the like. More specifically these components may correspond to icons, layout, color schemes, buttons, sliders, dropdown menus, tabs, links, error/success messages, mouse and touch interactions, keyboard shortcuts, tooltips, screen readers, and the like.

The storage interface 214 is any component capable of providing the processor 206 access to the database 204. The storage interface 214 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 206 with access to the database 204.

The processor 206 includes suitable logic, circuitry, and/or interfaces to execute operations for predicting an upcoming data point associated with the entity 104(1), and the like. Examples of the processor 206 include, but are not limited to, an Application-Specific Integrated Circuit (ASIC) processor, a Reduced Instruction Set Computing (RISC) processor, a Graphical Processing Unit (GPU), a Complex Instruction Set Computing (CISC) processor, a Field-Programmable Gate Array (FPGA), and the like.

The memory 208 includes suitable logic, circuitry, and/or interfaces to store a set of computer-readable instructions for performing various operations described herein. Examples of the memory 208 include a Random-Access Memory (RAM), a Read-Only Memory (ROM), a removable storage drive, a Hard Disk Drive (HDD), and the like. It will be apparent to a person skilled in the art that the scope of the disclosure is not limited to realizing the memory 208 in the server system 200, as described herein. In another embodiment, the memory 208 may be realized in the form of a database server or a cloud storage working in conjunction with the server system 200, without departing from the scope of the present disclosure.

The processor 206 is operatively coupled to the communication interface 210, such that the processor 206 is capable of communicating with a remote device 222, such as electronic devices of the entities 104, or communicating with any entity connected to the network 108 (as shown in FIG. 1).

It is noted that the server system 200 as illustrated and hereinafter described is merely illustrative of an apparatus that could benefit from embodiments of the present disclosure and, therefore, should not be taken to limit the scope of the present disclosure. It is noted that the server system 200 may include fewer or more components than those depicted in FIG. 2.

In one implementation, the processor 206 includes a data pre-processing module 224, a sentence generation module 226, a tokenization module 228, a word prediction module 230, and the like. It should be noted that components, described herein, such as the data pre-processing module 224, the sentence generation module 226, the tokenization module 228, and the word prediction module 230 can be configured in a variety of ways, including electronic circuitries, digital arithmetic, and logic blocks, and memory systems in combination with software, firmware, and embedded technologies. Moreover, it may be noted that the data pre-processing module 224, the sentence generation module 226, the tokenization module 228, and the word prediction module 230 may be communicably coupled with each other to exchange information with each other for performing the one or more operations facilitated by the server system 200.

In an embodiment, the data pre-processing module 224 includes suitable logic and/or interfaces for accessing the historical tabular dataset 218 from the database 204. As described earlier, the historical tabular dataset 218 includes the plurality of data points corresponding to the entity 104(1) such that each data point is associated with a plurality of data fields. Then, the data pre-processing module 224 is configured to generate a plurality of features for each data point based, at least in part, on the plurality of data fields associated with each data point. In particular, featurization techniques may be utilized to generate the set of features. In some instances, the data pre-processing module 224 may utilize existing featurization techniques such as one-hot encoding, logarithmic transformation, binning, and so on to generate the features described herein. It is noted that since these techniques are well-known in the art, they have not been explained here for the sake of brevity. For instance, in transaction datasets, examples of features may be the Card Present (CP) or Card Not Present (CNP) indicator, Contactless or not contactless indicator, Cross-border transaction indicator, merchant industry, transaction location, and so on.

In another embodiment, the data pre-processing module 224 may be configured to perform operations such as removing noise, feature engineering (also referred to as featurization or feature generation), feature selection, data cleaning, handling missing values, normalizing or scaling data, analyzing characteristics of the data, and converting the training and validation dataset into a format that AI or ML models such as the LLM 220 can process. Since these operations are well known in the art, the same has not been described herein for the sake of brevity

In another embodiment, the data pre-processing module 224 is configured to encode the plurality of features of each data point based, at least in part, on a set of predefined language rules to obtain a plurality of encoded features. Herein, the 'set of predefined language rules' refers to a set of explicit linguistic rules and structures that may be used to transaction information related to each data point into a unique language. The predefined language rules indicate a grammar and syntax that should be followed for encoding the features. For instance, in transaction datasets, for encoding the CP/CNP indicator, the predefined language rule may direct that if the transaction is CP, then, it should be encoded as zero (or '0') otherwise if it is CNP then it should be encoded as unity (or '1'). Similarly, other rules in the set of predefined language rules direct how other features should be encoded. In some instances, the predefined language rules may be defined by the managing entity such as the administrator. It is noted that the predefined language rules are unique for different types of tabular data. In other words, the predefined language rules are data-specific and unique for different datasets. In some instances, the plurality of encoded features may be stored in the database 204 to be accessed later by any module of the server system 200 for performing various operations described herein.

In an embodiment, the sentence generation module 226 includes suitable logic and/or interfaces for generating a data point word representation for the entity 104(1) based, at least in part, on the plurality of encoded features associated with each data point. Herein, the data point word representation may include one or more words. It is noted that each word is generated for each data point with the corresponding plurality of encoded features. Each word includes a first portion and a second portion. The first portion indicates the position of each of the corresponding encoded features in the word and the second portion indicates the value of each of the corresponding encoded features. Further, the first portion and the second portion are separated by a first special symbol, wherein different encoded features of each data point in the word are separated from each other using a second special symbol. It is noted that the first special symbol and the second special symbol may be predefined in the set of predefined language rules. In some instances, these special symbols may be special characters. This aspect has been described later with reference to FIG. 3 and FIG. 6.

In another embodiment, the sentence generation module 226 is configured to generate a data point sentence representation (or simply, a sentence) based, at least in part, on the one or more words associated with each data point. In particular, the sentence is formed by combining the one or more words such that the one or more words associated with each data point are separated from each other in the sentence using a third special symbol. The third special symbol may be predefined in the set of predefined language rules as well. In an instance, the third special symbol may be a special character as well. This aspect has been described later with reference to FIG. 3 to FIG. 6.

In an embodiment, the tokenization module 228 includes suitable logic and/or interfaces for tokenizing the data point sentence representation into a data point token representation. Such that the data point token representation is a token sequence or a sequence of tokens. In a non-limiting example, tokenization techniques such as Byte Pair Encoding (BPE), SentencePiece, WordPiece, Subword Regularization, FastText, and so on.

In a non-limiting implementation, for tokenizing the data point sentence representation into a data point token representation, the tokenization module 228 is configured to perform a tokenization process. In particular, the tokenization module 228 initializes the tokenization process with the one or more words associated with each data point for the data point sentence representation. Then, the tokenization module 228 computes a word frequency count for each word in the data point sentence representation. The word frequency count provides a count of how many times different words are repeated in the sentence. Then, the tokenization module 228 is configured to iteratively perform steps (1) to (4) till a desired vocabulary size is achieved. Herein, the desired vocabulary size indicates an optimal vocabulary size that can be efficiently processed by the LLM 220 without facing a vocabulary explosion. The desired vocabulary size may be defined by the managing entity based on the LLM 220. Step (1) includes detecting most frequent pairs of consecutive words in the data point sentence representation. Step (2) includes merging the most frequent pairs to generate a new word within the data point sentence representation. Step (3) includes updating the word frequency count for the data point sentence representation. Step (4) includes computing a vocabulary size based, at least in part, on a word count of the data point sentence representation. It is noted that after each iteration, the vocabulary size is compared with the desired vocabulary size. Then, the iterative process is repeated unless the vocabulary size becomes lower or equal to the desired vocabulary size. This aspect ensures that the vocabulary of the tabular data does not explode. In a non-limiting implementation, the tokenization module 228 performs these steps of initializing, computing, and performing iteratively steps of: detecting, merging, updating, and computing as a part of training a tokenizer. Upon obtaining the vocabulary of the desired vocabulary size, the tokenizer is considered to a trained tokenizer which is suitable for tokening the data point sentence representation. Further, the tokenization module 228 tokenizes the data point sentence representation into the data point token representation using the trained tokenizer.

In an embodiment, the word prediction module 230 includes suitable logic and/or interfaces for generating an upcoming data point token in the token sequence based, at least in part, on applying the data point token representation to the LLM 220.

Then, the word prediction module 230 utilizes the tokenization module 228 to de-tokenize the upcoming data point token into the upcoming data point representation. In another embodiment, the word prediction module 230 is configured to decode the upcoming data point representation to obtain one or more features associated with an upcoming data point based, at least in part, on the set of predefined language rules.

In some instances, the word prediction module 230 may be configured to train the LLM 220 as well. In a non-limiting implementation, the word prediction module 230 may access a training dataset from the database 204. The training dataset may include a plurality of test data fields associated with a plurality of test data points corresponding to a plurality of entities. It is noted that the training dataset may be a subset or portion of the historical tabular dataset 218.

The term 'training dataset' may refer to a collection of data (or data samples/observations) used to train the LLM 220. This dataset includes input data and the corresponding correct outputs (labels or target values) that the LLM 220 uses to learn the underlying patterns and relationships within the data. During the training process, the model iteratively adjusts its parameters (or hyper parameters) based on the input data and feedback from its predictions compared to the actual outputs, aiming to minimize prediction errors and improve accuracy.

Further, the word prediction module 230 may utilize the data pre-processing module 224 to generate a plurality of features for each entity (*e.g.,* the entity 104(1)) based, at least in part, on the plurality of test data fields associated with each test data point. Then, the word prediction module 230 may encode the plurality of features for each entity 104(1) based, at least in part, on the set of predefined language rules. Further, the word prediction module 230 may utilize the sentence generation module 226 to generate a plurality of data point word representations for the plurality of entities based, at least in part, on the plurality of encoded features for each entity 104(1) such that each data point word representation includes at least one word. Then, the word prediction module 230 may generate a plurality of data point sentence representations based, at least in part, on the at least one word associated with each test data point of each entity 104(1). Such that each data point sentence representation indicates a sequence of data points associated with each entity 104(1).

Furthermore, the word prediction module 230 may utilize the tokenization module 228 to tokenize the plurality of data point sentence representations into a plurality of data point token representations such that each data point token representation includes a token sequence. Then, the word prediction module 230 is configured to train the LLM 220 based, at least in part, on the plurality of data point sentence representations. In particular, training the LLM 220 includes iteratively performing the following steps till predefined criteria are met. The steps include initializing the LLM 220 based, at least in part, on one or more hyper parameters; determining, by the LLM 220, an upcoming token in the token sequence based, at least in part, on the plurality of data point sentence representations; computing, using one or more loss functions, one or more loss values based, at least in part, on comparing the upcoming token and a ground truth token present in the training dataset; and optimizing the one or more hyper parameters of the LLM 220 based, at least in part, on back-propagating the one or more loss values. This aspect has been explained later with reference to FIG. 3.

FIG. 3 illustrates a schematic representation 300 of the architecture of the LLM such as the LLM 220, in accordance with an embodiment of the present disclosure.

As may be understood, LLMs are typically built using a transformer architecture. Using the transformer architecture, an LLM such as the LLM 220 can tokenize an input prompt (such as a query to predict an upcoming data point for an entity (*e.g.,* the entity 104(1))) into smaller units. The LLM 220 can access the data point sentence representation related to the entity 104(1).

For instance, a data point sentence representation of the input prompt (depicted as inputs 302) may be tokenized by the LLM 220 into words or sub-words. During tokenization, the sentence in the input prompt is initially converted to a sequence of numbers as any machine or model can understand data in numerical form. This sequence of numbers is then converted to a string of characters, words, or sub-words. Further, each token from the plurality of tokens generated for the initial prompt is converted to an embedding. This embedding is shown as an input embedding 304 in FIG. 3. As may be understood, these embeddings capture the meaning and context of the various words forming the sentence of the initial prompt. Herein, since the data point sentence representation can be tokenized to generate a data point token representation. Then, the data point token representation is used to generate the input embedding 304.

Typically, since transformers do not pay attention to the word order in a sentence, positional encodings have to be added to the embeddings to enforce information about the position of each word in the sequence within the sentence of the input prompt. Further, the presence of the first special symbol (*i.e.,* #), the second special symbol (*i.e., a* comma ','), and the third special symbol (*i.e*., [SEP]). The first portion helps the LLM 220 understand the position of the each encoded feature of the corresponding plurality of encoded features in the data point word representation forming the data point sentence representation.

The addition of the positional encoding to the input embedding 304 is depicted by an operator 306. Thereafter, the embeddings are fed to a multi-head self-attention mechanism or multi-head attention *(see,* 308). The multi-head self-attention mechanism allows the LLM 220 to weigh the importance of different words in the sequence when making predictions. In other words, the multi-head self-attention mechanism enables the LLM 220 to capture the dependencies between words (herein, the tokens) in a sequence, regardless of the distance between the words within the sequence from each other.

It is noted that the self-attention mechanism computes a weighted sum of all input embeddings where the weights are determined based, at least in part, on the relevance of each word to the current word in the sequence of the sentence. As may be understood, the self-attention mechanism is configured to compute attention scores using a learned set of parameters (known, as attention weights). The result is a context vector for each word, *i.e., a* representation of each token that captures contextual information by considering all other words in the sequence within the sentence. To enhance the capacity of the self-attention mechanism, the transformer architecture uses the multi-head attention *(see,* 308). To that end, instead of having a single set of attention weights, the LLM 220 uses multiple heads (or sets) of attention weights. Each head learns to attend to different parts of the input sequence and captures different aspects of the context. Further, the outputs of the multiple attention heads are concatenated and linearly transformed to produce the final attention output.

Thereafter, the representation of each token is passed through a feed-forward neural network (*see,* 310). The feed-forward neural network generally consists of fully connected layers with various activation functions such as Rectified Linear Unit (ReLu) and further, the feed-forward neural network is configured to learn complex transformations of the data.

It is noted that layer normalization and residual connections are used by the transformer architecture to stabilize the training of the LLM 220 thereby, enabling the LLM 220 to learn effectively. It is understood that residual connections allow gradients to flow more easily through the neural network.

In particular, add and norm layers (*see,* 312 and 314) are added to each sub-layer of the multi-layer neural network for performing the layer normalization and residual connections. The 'ADD' step adds the original input of a sub-layer to the output from that sub-layer to generate a new output. Mathematically, this can be shown as Output =Sublayer (input) + Input, herein sublayer (input) is a function that represents the initial output from the sub-layer. The goal of the ADD step is to form residual connections thus, allowing gradients to flow more easily during training. This helps to mitigate the vanishing gradient problem, making it easier to train very deep networks. Further, the ADD step ensures that the neural network do not completely replace the original input but rather refines the same. This is important because the original input contains valuable information about the input sequence. Once, the ADD step is concluded, NORM (*i*.*e*., Normalization) step is applied to the output from the sub-layer. Layer normalization is a technique used to stabilize and speed up training in deep neural networks by normalizing the activations of each neuron. Mathematically, layer normalization can be represented as Output = LayerNorm (Sublayer (Input) + Input). The NORM step normalizes the activation of neurons of the sub-layer of the neural network, ensuring their mean is zero and standard deviation is one. This aspect helps the gradient from becoming too small or too large during back-propagation.

Further, it is understood that transformers typically consist of multiple identical layers stacked on top of each other (shown by block 316). Each layer refines the representations learned in the previous layers. It is noted that the various layers in block 316 are identical to the layers shown with reference to block 318, therefore they are not explained again for the sake of brevity. It is noted that the each layer in block 316 may be represented by Nₓ, where 'X' is the number of layers and N is the identifier of the corresponding layer. In other words, the various layers may be represented by N₁, N₂, ..., Nₓ. These stacks of layers are divided into encoder stacks and decoder stacks. Herein, the encoder stack is responsible for processing the input sequence (*e*.*g*., the query or the data point sentence representation) and creating context representations whereas the decoder stack is responsible for generating the output sequence (*e.g.,* the upcoming data point representation) based on the context representations created by the encoder stack.

Furthermore, 'Linear' and 'Softmax' operations are used at the final layer of the transformer architecture for the sequence-to-sequence tasks such as responding to prompts from a user. The linear operation (*see,* 320) is a neural network layer that performs a linear transformation on its input. The linear operation typically used to project the context representations learned by the transformer architecture into a space where each dimension corresponds to a specific token or word in a target vocabulary (or dictionary). The terms "target dictionary" or "target vocabulary" refer to a predefined set of words or tokens that the LLM 220 is expected to generate as output. In a non-limiting example, the target vocabulary can correspond to the vocabulary (of desired vocabulary size) generated by the tokenization module 228 using the trained tokenizer.

The softmax operation (*see,* 322) is applied to the scores produced by the linear layer. Softmax is used to convert these scores into a probability distribution over the target vocabulary. It ensures that the values in the distribution are positive and sum to 1, making it interpretable as probabilities. The result of the softmax operation (*see*, 322) is a probability distribution where each value represents the likelihood of a specific token being the next word in the output sequence. The output embedding (*see,* 324) is the learned representation of tokens from the sentence of the initial prompt. Further, the output probabilities (*see,* 326) refer to the probabilities associated with each token in the sentence of the initial prompt for a given position in the output sequence (*see,* outputs 328). These probabilities are computed using the softmax activation function and are used to determine the likelihood of each token being the next word in the output sequence. In other words, the probabilities generated by the softmax activation function indicate a probability of a future token being the upcoming data point token. In an instance, the output sequence may be shifted right. Herein, "shifted right" refers to the technique used during the training of the decoder for tasks involving sequence generation, such as language modeling and machine translation. This process ensures that the LLM 220 generates the next word in a sequence based on all previously generated words, while preventing it from "seeing" future words in the sequence during training.

To reiterate, the following intermediate steps are performed before sending data to the LLM 220 for fine-tuning:

Pre-processing input prompt: Data point sentence representations generated for a plurality of data points (such as a plurality of transactions) associated with a plurality of entities (such as a plurality of cardholders) are broken down into words (*i.e.,* the data point word representation). These words are converted to tokens. In some instances, a dictionary of word to token embeddings is maintained.

Post-processing: Output tokens, *i.e.,* the upcoming data point token, generated by the LLM 220 are converted back to the upcoming data point representation to obtain one or more features associated with an upcoming data point using the same dictionary of word to token embeddings.

LLM: The LLM 220 uses a combination of self-attention, transformers, encoders, and decoders. Self-attention helps the LLM 220 to assign different weights to different words which helps to capture context. Transformers help to capture complex relationships in the language. Encoders and decoders help to compress information and keep relevant information.

The training of the LLM 220 generally consists of two phases, namely, the pre-training phase and the fine-tuning phase.

During the pre-training phase, the LLM 220 is trained on the training dataset. The training dataset may include a plurality of test data fields associated with a plurality of test data points corresponding to a plurality of entities. For example, the training dataset may include a plurality of transaction attributes associated with a plurality of transactions performed by a plurality of cardholders. It is understood that the goal of this pre-training phase, the LLM 220 is allowed to predict the next word in a sentence given the context. To achieve this, some words in the training data are randomly masked while the model objective is set to predict these masked words correctly. This process is known as masked language modeling.

In a non-limiting implementation, training the LLM 220 includes iteratively performing the following steps till predefined criteria are met. The steps include (1) initializing the LLM 220 based, at least in part, on one or more hyper parameters; (2) determining, by the LLM 220, an upcoming token in the token sequence based, at least in part, on the plurality of data point sentence representations; (3) computing, using one or more loss functions, one or more loss values based, at least in part, on comparing the upcoming token and a ground truth token present in the training dataset; and (4) optimizing the one or more hyper parameters of the LLM 220 based, at least in part, on back-propagating the one or more loss values. The predefined criteria may include performing the iterative process till saturation of loss takes place, a fixed number of epochs, or so on.

Once, the pre-training phase is completed, the LLM 220 goes through the fine-tuning phase. In the fine-tuning stage, the LLM 220 is trained on product-specific data, entity-specific data, and a set of predefined rules. The LLM 220 is fine-tuned to perform the task of generating a query response message in response to the query received from a user. For example, the query may be to detect whether an upcoming transaction would be fraudulent or not. The LLM 220 can predict the features associated with the upcoming transaction and utilize these features to determine if the transaction would be fraudulent or not. Further, the LLM 220 is evaluated based on a variety of ML model evaluation techniques to optimize the various neural network parameters associated with the LLM 220.

As may be understood, once the training and evaluation process of the LLM 220 is completed, the LLM 220 can be deployed in various applications such as chat assistants. It is understood that once the LLM 220 is deployed as a chat assistant it can be configured to respond to queries or prompts from users such as issuing banks or acquiring banks to the plurality of products offered by the payment processor since the LLM 220 has been fine-tuned on the transaction data, and a set of predefined rules. It is understood that the various operations of the LLM 220 described herein are performed using the various components or modules of the server system 200.

FIG. 4 illustrates a schematic representation of another environment 400 related to at least some example embodiments of the present disclosure. Although the environment 400 is presented in one arrangement, other embodiments may include the parts of the environment 400 (or other parts) arranged otherwise depending on, operations performed similar to that performed in the environment 100. Thus, it should be noted that the environment 400 is an example implementation of the environment 100, with the environment 400 representing a financial industry in which the entity 104(1) can be at least one of the cardholders and/or merchants. Thus, the plurality of data points or samples of the environment 100 may correspond to a plurality of payment transactions performed between the cardholders and the merchants in the environment 400.

In one embodiment, the environment 400 includes entities, such as the server system 102, a plurality of cardholders 402(1), 402(2), ... 402(N) (collectively referred to hereinafter as the 'plurality of cardholders 402' or simply 'cardholders 402'), a plurality of merchants 404(1), 404(2), ... 404(N) (collectively referred to hereinafter as a 'plurality of merchants 404' or simply 'merchants 404'), a plurality of issuer servers 406(1), 406(2), ... 406(N) (collectively referred to hereinafter as the 'plurality of issuer servers 406' or simply 'issuer servers 406'), a plurality of acquirer servers 408(1), 408(2), ... 408(N) (collectively referred to hereinafter as the 'plurality of acquirer servers 408' or simply 'acquirer servers 408'), a payment network 410 including a payment server 412, and a database 414 each coupled to, and in communication with (and/or with access to) the network 108. Herein, it may be noted that 'N' is a non-zero natural number that may be different for each entity.

As used herein, the term "cardholder" (such as cardholder 402(1)) refers to a person who has a payment account or a payment card (*e.g*., credit card, debit card, *etc*.,) associated with the payment account, that will be used by a merchant (such as the merchant 404(1)) to perform a payment transaction. The payment account may be opened via an issuing bank or an issuer server (*e*.*g*., the issuer server 406(1)). The term "merchant" refers to a seller, a retailer, a purchase location, an organization, or any other entity that is in the business of selling goods or providing services, and it can refer to either a single business location or a chain of business locations of the same entity. Further, as used herein, the term "payment network" refers to a network or collection of systems used for the transfer of funds through the use of cash substitutes. Payment networks (including payment network 410) are set up by companies or businesses that connect an issuing bank with an acquiring bank to facilitate digital payments between the cardholders 402 and the merchants 404. In an example, the cardholders 402 may use their corresponding electronic devices (not shown) to access a mobile application or a website associated with the merchants 404, or any third-party payment application to perform a payment transaction.

As may be understood, within the financial domain, LLM models cannot be used efficiently due to the presence of complex and vast amounts of tabular data, *i.e.,* the transaction. Using transaction data to train the LLM 220 to perform predictions using such an LLM 220 would lead to poor results.

In an implementation, the server system 102 is coupled with the database 414. In one embodiment, the server system 102 may facilitate payment processors operating the payment network 410 through the payment server 412 in predicting an upcoming or future transaction by a cardholder such as the cardholder 402(1). In some implementations, the server system 102 can be embodied within a payment server (*e*.*g*., the payment server 412) associated with the payment network 410 (owned by the payment processor), however, in other examples, the server system 102 can be a standalone component (acting as a hub) connected to the issuer servers 406 and the acquirer servers 408 as well.

In an embodiment, the database 414 may include a historical transaction dataset 416. The historical transaction dataset 416 may include one or more transaction attributes related to the plurality of transactions performed between the cardholders 402 and the merchants 404. As may be understood, each cardholder (*e*.*g*., the cardholder 402(1)) can perform a plurality of transactions with different merchants. Herein, the number of transactions performed by each cardholder 402(1) may be different. The historical transaction dataset 416 may be maintained and updated with information related to new transactions as they take place in real-time (or near real-time). In other words, the historical transaction dataset 416 is a repository of information associated with all the transactions (or a subset of transactions) performed over a historical time period. It is noted that the plurality of transactions may refer to the plurality of data points and the plurality of data fields may refer to the plurality of transaction attributes in this specific implementation. In various examples, the historical transaction dataset 416 may, but is not limited to, one or more transaction attributes for a plurality of transactions, such as transaction amount, source of funds such as bank accounts, debit cards or credit cards, transaction channel used for loading funds such as Point Of Sale (POS) terminal or Automated Teller Machine (ATM), transaction velocity features such as count and transaction amount sent in the past 'x' number of days to a particular user, external data sources, merchant country, merchant Identifier (ID), cardholder ID, cardholder product, cardholder Permanent Account Number (PAN), Merchant Category Code (MCC), merchant location data or merchant co-ordinates, merchant industry, merchant super industry, ticket price, and other transaction-related data.

In other various examples, the database 414 may also include multifarious data, for example, social media data, Know Your Customer (KYC) data, payment data, trade data, employee data, Anti Money Laundering (AML) data, market abuse data, Foreign Account Tax Compliance Act (FATCA) data, and fraudulent payment transaction data as well.

In an embodiment, the server system 102 is configured to access the historical transaction dataset 416 from the database 414. In one instance, the transaction dataset may include information related to the plurality of transactions performed by a cardholder (such as the cardholder 402(1)) at a plurality of merchants (such as the merchants 404). Herein, each transaction can be associated with a plurality of data fields indicating a plurality of transaction attributes. Then, the server system 102 is configured to generate a plurality of features for each transaction based, at least in part, on the plurality of data fields associated with each transaction. For example, for an example transaction, a first feature can indicate that the dollar value for a transaction is $35, a second feature can indicate that the transaction country such as the United States of America (USA), and a third feature can indicate whether the transaction is a Card Present (CP) transaction. It is noted that other features can also be generated however the same are not described here for the sake of simplicity. Then, the server system 102 is configured to encode the plurality of features to generate a plurality of encoded features using a set of predefined language rules. Herein, the set of predefined language rules may indicate the rules for converting transactions into words. Then, the server system 102 is configured to generate a transaction word representation for each transaction based, at least in part, on the plurality of encoded features. Herein, the transaction word representation includes one or more words. In particular, each word is generated for a corresponding encoded feature and includes a first portion indicating a position of the corresponding encoded feature in the data point word representation. Further, each word has a second portion indicating the value of the corresponding encoded feature, the first portion and the second portion being separated by a first special symbol. An example of the first special symbol can be a special character such as '#'. Additionally, the different encoded features within each word are separated from each other using a second special symbol. An example of the second special symbol can be a special character such as ','. Returning to the previous example, the transaction word representation for the example transaction would be 00#35, 01#USA, 02#01. Herein, 00, 01, and 02 indicate the position of different encoded features within a word and form the first portion while, 35, USA, and 01 indicate the value of these features while forming the second portion. It is understood that the set of predefined language rules may define how to translate the CP indicator. In this example, the rule may state that a CP transaction is depicted by 01 and a Card Not Present (CNP) transaction is indicated using 00.

Further, the server system 102 is configured to generate a transaction sentence representation based, at least in part, on the one or more words associated with each transaction. Herein, the one or more words associated with each transaction are separated from each other in the transaction sentence representation using a third special symbol. An example of the third special symbol can be a special character such as '[SEP]'. For example, two transactions in a sentence may be given by: 00#35, 01#USA, 02#01[SEP] 00#25, 01#IND, 02#00. Here, as described earlier, the first transaction indicates a transaction of a dollar value of $35 is performed in USA using CP model. Similarly, the second transaction may indicate a transaction of a dollar value of $25 is performed in India using CNP mode. Thus, it may be understood that the indices 00, 01, 02, and so on representing the position different encoded features of a transaction does not change for new transactions.

Furthermore, the server system 102 is configured to generate, by a LLM (*e.g*., LLM 220) associated with the server system 102, an upcoming transaction representation in the transaction sentence representation based, at least in part, on the transaction sentence representation being applied to the LLM 220. In particular, the server system 102 is configured to tokenize the transaction sentence representation into a transaction token representation. For example, the BPE algorithm is used to perform the tokenization process. Such that the transaction token representation becomes a token sequence. For example, the two transactions in the sentence given by: 00#35, 01#USA, 02#01[SEP] 00#25, 01#IND, 02#00 can be tokenized as [23,43,21]. Further, the LLM 220 is used to generate an upcoming transaction token in the token sequence based, at least in part, on applying the transaction token representation to the LLM 220. In other words, the LLM 220 predicts a future token in the token sequence. For example, the upcoming token may be [36]. Later, the upcoming transaction token is de-tokenized into the upcoming transaction representation. In other words, the upcoming token along with the sentence may be treated to determine the next transaction. For example, the result of detokenization may be 00#5, 01#BRA, 02#00.

Thereafter, the server system 102 is configured to decode the upcoming transaction representation to obtain one or more features associated with an upcoming transaction based, at least in part, on the set of predefined language rules. Returning to the previous example, the upcoming transaction representation of 00#5, 01#BRA, 02#00 indicates that the upcoming transaction may be a transaction of a dollar value of $5 to be performed in Brazil using CNP mode.

As may be understood, these one or more features of the transaction can be utilized directly to address queries made by the issuers or acquires. In some instances, these one or more features can be fed to various down-stream models (such as fraud detection models) to perform task-specific predictions as well.

As may be appreciated, the approach described by the present disclosure can easily be scaled and applied to various down-stream tasks specific to different industries with minor modifications. It is noted that such applications are also covered within the scope of the present disclosure. Another example of an application of the approach of the proposed disclosure being applied in the industry has been described with reference to FIG. 5.

FIG. 5 illustrates a schematic representation of yet another environment 500 related to at least some example embodiments of the present disclosure. Although the environment 500 is presented in one arrangement, other embodiments may include the parts of the environment 500 (or other parts) arranged otherwise depending on, operations performed similar to that performed in the environment 100. Thus, it should be noted that the environment 500 is an example implementation of the environment 100, with the environment 500 representing the healthcare industry in which the entities 104 can be at least one of the patients, healthcare providers (such as nurses, doctors, and so on), and/or healthcare institutions. Thus, the plurality of data points or samples of the environment 100 may correspond to individual patient records corresponding to the patients recorded at the healthcare institutions in the environment 500 where the plurality of data fields indicate information related to the patients.

In one embodiment, the environment 500 includes entities, such as the server system 102, a plurality of patients 502(1), 502(2), ... 502(N) (collectively referred to hereinafter as a 'plurality of patients 502' or simply 'patients 502'), a plurality of healthcare institutions 504(1), 504(2), ... 504(N) (collectively referred to hereinafter as a 'plurality of healthcare institutions 504' or simply 'healthcare institutions 504'), a plurality of medical data servers 506(1), 506(2), ... 506(N) (collectively referred to hereinafter as a 'plurality of medical data servers 506' or simply 'medical data servers 506'), and the database 106 each coupled to, and in communication with (and/or with access to) the network 108. Herein, it may be noted that 'N' is a non-zero natural number that may be different for each entity (*e.g.,* the entity 104(1))).

As used herein, the term "patient" refers to a person who is receiving or registered to receive medical treatment. The patient (*e.g.,* the patient 502(1)) may receive medical treatment from a healthcare provider or professional, such as a doctor, a nurse, a therapist, or the like. The patients 502 may seek medical assistance due to illness, injury, or other concerns regarding their health. The patients 502 may present with various symptoms, medical conditions, or health-related issues, and they may rely on the healthcare professionals to diagnose, treat, and manage their health-related issues.

The term "healthcare institution" refers to an institution for medical and surgical treatment and/or nursing care for sick or injured people *i.e.,* the patients 502. It is to be noted that healthcare institutions 504 can provide a wide range of medical services, including emergency care, surgery, diagnostic imaging, laboratory testing, specialized treatments, and the like. Examples of healthcare institutions 504 may include hospitals, clinics, urgent care centers, trauma centers, assisted living centers, surgical centers, long-term care centers, rehabilitation centers, mental health facilities, hospices, and the like.

In an example, the healthcare institutions 504 may provide a mobile application or a website for receiving appointments from patients 502. Such websites or applications also play a major role in capturing and storing patient-related data in the medical data servers 506 that may be associated with individual healthcare institutions 504.

The patients 502 may use their corresponding electronic devices to access the mobile application or the website associated with the healthcare institutions 504 to book appointments with the doctors, take medical advice, request certain medical prescriptions, consult a physician, search for nearby hospitals, learn about various diseases or medical conditions, access their test results or diagnosis, or the like.

As may be understood, within the healthcare domain, LLMs cannot be used to predict future symptoms of the patients 502 due to the patient data being complex and tabular in nature.

In an implementation, the server system 102 is coupled with a database 508. In one embodiment, the server system 102 may facilitate healthcare institutions 504 operating the healthcare facilities in predicting upcoming patient symptoms as well. In some implementations, the server system 102 can be embodied within a medical data server (e.g., the medical data server 506(1)) (owned by the healthcare institution 504(1)), however, in other examples, the server system 102 can be a standalone component (acting as a hub) connected to the connected to the medical data servers 506 as well.

In an embodiment, the database 508 may include a patient history dataset 510. The patient history dataset 510 may include patient-related information of the plurality of patients 502 (similar to the plurality of data points). The patient history dataset 510 may be maintained and updated with patent information related to any new patient as they enter the healthcare institution 504(1). In other words, the patient history dataset 510 is a repository of information associated with all the patient-related information associated with the patients 502 who have accessed the services of the healthcare institution 504(1) over a historical time period. In various examples, the patient history dataset 510 may include, but is not limited to, patient-related information (stored in the plurality of data fields) for all patients 502, such as patient name, date of birth, gender, contact information, other demographic details, insurance information, emergency contact information, and the like. In some examples, the patient history dataset 510 may also include patient-related information for all patients 502, such as family medical history, past medical conditions, past surgeries, past procedures, current and past diagnoses, blood tests, imaging scans, prescription medications, allergies and adverse reactions, reports, consultation history, and referral history, care plans, and discharge summaries, and the like.

In other various examples, the database 508 may also include information provided by the patients 502, information recorded related to the health conditions of the patients 502, consent forms and patient instructions, billing and administrative data, legal and privacy documents, and the like as well.

It should be noted that the operations for predicting upcoming patient symptoms using the LLM 220 are similar to operations described earlier with reference to FIGS. 1 to 4. Therefore, these operations are not described again in detail for the sake of brevity.

It is noted that the predictions generated using this approach can help doctors in tackling diseases in their patients 502. This prediction can help the healthcare provider of the patient 502(1) in determining whether to send the patient 502(1) for cancer tests (such as biopsies). As may be appreciated since healthcare resources such as testing facilities as often overburdened, such predictions can help to reduce their burden by preventing unnecessary testing while also saving the patient 502(1) financial resources.

It is noted that although FIG. 4 and FIG. 5 describe specific applications of the various embodiments of the present disclosure, the same should not be construed as a limitation to the scope of the present disclosure. In other words, the various embodiments of the present invention can be utilized to perform various other suitable applications as well without departing from the scope of the present disclosure.

FIG. 6 illustrates a block diagram 600 for predicting one or more features related to an upcoming data point (*i.e.,* upcoming transaction) associated with an entity (*i.e*., the cardholder 402(1)), in accordance with an embodiment of the present disclosure. The various operations depicted by the block diagram 600 may be executed by, for example, the server system 200. It is noted that FIG. 6 depicts the process for predicting the upcoming data point via an example from the finance industry where historical transactions performed by the cardholder 402(1) are analyzed by the server system 200 to predict the features associated with a future or upcoming transaction. Herein, a tabular transaction dataset *(see,* block 602) including a plurality of data fields (*i.e.,* a field 1, a field 2, and a field 3) is considered for a plurality of data points (*i.e.,* three distinct transactions) performed by the cardholder 402(1). As shown, field 1 indicates whether the transaction is a CP or CNP transaction. Herein, '0' may indicate a CP transaction, and '1' may indicate a CNP transaction. Field 2 indicates whether the transaction is contactless or not. Herein, '0' may indicate that the transaction is contactless, and '1' may indicate that the transaction is not contactless. Field 3 indicates the location of the transaction. Herein, 'ABC' and 'DEF' indicate different locations at which these transactions were performed.

At first, the server system 200 is configured to convert the plurality of transactions into multiple transaction word representations (*see,* block 604). In particular, each transaction is converted to a word such that the transaction word representation includes one or more words, each word corresponding to different transactions. As illustrated, three words are generated for the three transactions are given by three words. The first word is given by 00#1,01#0,02#ABC. The second word is given by 00#0,01#1,02#ABC. The third word is given by 00#2,01#3,02#DEF.

As described earlier, each word is generated for a corresponding plurality of encoded features of the transaction and includes a first portion indicating the position of each corresponding encoded feature in the word and a second portion indicating the value of the corresponding encoded feature. The first portion and the second portion are separated by the first special symbol. Herein, different encoded features of the transaction are separated from each other using the second special symbol. In the illustrated example, the first portion is given by 00, 01, and 02 which indicate the respective position of the features within the word. As may be understood, these feature positions will remain common for all transactions. For instance, if a transaction is missing a particular feature, the position for the said feature will be skipped and the first portion for the next feature will have the position marker designated for the next feature. These feature positions can be predefined by the administrator in the set of predefined language rules. Further, in the illustrated example, the second portion is given by 1, 0, and ABC for the first word, 0, 1, and ABC for the second word, and 2, 3, and DEF for the third word. This second portion indicates the values associated with their corresponding encoded features. In the illustrated example, the first special symbol is '#' and the second special symbol is ','. However, it is noted that any other non-identical special symbols can be used as well. These special symbols can be designated in the set of predefined language rules by the administrator.

Then, the server system 200 is configured to convert the transaction word representation into the transaction sentence representation (*see,* block 606). To achieve this, the one or more words are joined together with the help of a third special symbol *(i.e.,* [SEP]) in a sequence to form the sentence. In other words, all the transactions for a particular cardholder are transformed into a sentence.

Then, the server system 200 is configured to tokenize (*see,* block 608) the transaction sentence representation into a transaction token representation. This transaction token representation is a token sequence. In an instance, the tokenizing process can be performed using the BPE algorithm. However, other tokenizing algorithms may be used as well. In the illustrated example, the transaction token representation is given as '2,12,50,24,1,22,20, 24,1,28,42,30'.

Now this token sequence is fed to the LLM 220. The LLM 220 is trained on an historical transaction dataset (*e.g*., the historical transaction dataset 416) including the plurality of transactions performed by each cardholder (*e*.*g*., the cardholder 402(1)) of the plurality of cardholders 402 with the plurality of merchants 404. The LLM 220 is trained to predict an upcoming token in the token sequence. In other words, the LLM 220 is trained to predict an upcoming transaction token in the token sequence (*see,* block 612). In the illustrated example, the LLM 220 predicts the upcoming transaction token as '1' thus, making the transaction sequence into '12,12,50,24,1,22,20, 24,1,28,42,30, 1' Thereafter, the predicted token sequence is de-tokenized (*see,* block 614) by the server system 200 to generate a new transaction sentence representation. This sentence representation will include the one or more words and a new word. Such that the new word will represent the upcoming transaction word representation (simply, upcoming transaction representation). This upcoming transaction representation can be decoded by the server system 200 using the set of predefined language rules to obtain one or more features along with their corresponding values associated with the future or upcoming transaction. Examples of these one or more features (*see,* block 616) include CP or CNP indicator, Contactless or not contactless indicator, Cross-border transaction indicator, merchant industry, transaction location, and so on.

As may be appreciated, once the features of an upcoming transaction are predicted, they can be used by any downstream task model for performing downstream tasks such as fraud classification or detection. For instance, a simple Multi-Layer Perceptron (MLP) may be used to classify the transaction as either fraudulent or non-fraudulent using the predicted features.

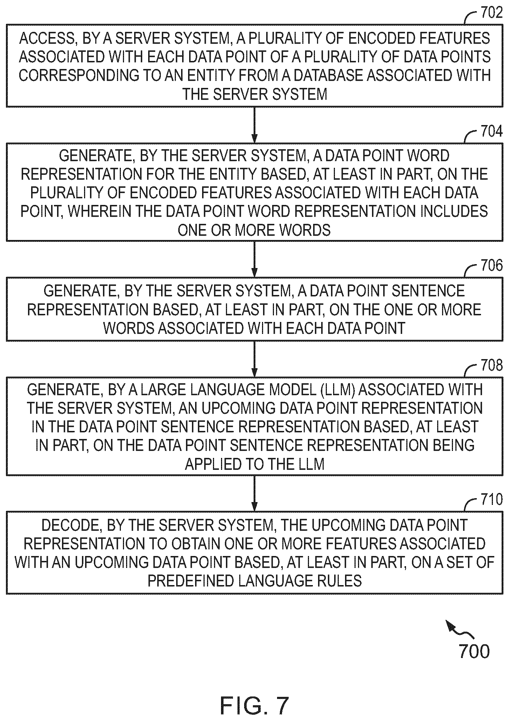

FIG. 7 illustrates a process flow diagram depicting a method 700 for predicting an upcoming data point associated with an entity (*e.g.,* the entity 104(1)), in accordance with an embodiment of the present disclosure. The method 700 depicted in the flow diagram may be executed by, for example, the server system 200. The sequence of operations of the method 700 may not be necessarily executed in the same order as they are presented. Further, one or more operations may be grouped and performed in the form of a single step, or one operation may have several sub-steps that may be performed in parallel or in a sequential manner. Operations of the method 700, and combinations of operations in the method 700 may be implemented by, for example, hardware, firmware, a processor, circuitry, and/or a different device associated with the execution of software that includes one or more computer program instructions. The plurality of operations is depicted in the process flow of the method 700. The process flow starts at operation 702.

At operation 702, the method 700 includes accessing, by a server system (e.g., the server system 200), a plurality of encoded features associated with each data point of a plurality of data points corresponding to an entity (*e.g.,* the entity 104(1)) from a database (such as the database 204) associated with the server system 200.

At operation 704, the method 700 includes generating, by the server system 200, a data point word representation for the entity (*e.g.,* the entity 104(1)) based, at least in part, on the plurality of encoded features associated with each data point. Herein, the data point word representation includes one or more words.

At operation 706, the method 700 includes generating, by the server system 200, a data point sentence representation based, at least in part, on the one or more words associated with each data point.

At operation 708, the method 700 includes generating, by a Large Language Model (LLM) (such as LLM 220) associated with the server system 200, an upcoming data point representation in the data point sentence representation based, at least in part, on the data point sentence representation being applied to the LLM 220. In a non-limiting implementation, during the process of generating the upcoming data point representation using the LLM 220, initially, the data point sentence representation is tokenized into a data point token representation. This tokenization operation is already explained with reference to FIGS. 2 and 3. To that end, the same is not explained again for the sake of brevity. As may be understood, the data point token representation includes the token sequence. Further, the LLM 220 predicts an upcoming data point token representation in the token sequence based, at least in part, on applying the data point token representation to the LLM 220. Later, the tokenization module 228 de-tokenizes the upcoming data point token representation into the upcoming data point representation.

At operation 710, the method 700 includes decoding, by the server system 200, the upcoming data point representation to obtain one or more features associated with an upcoming data point based, at least in part, on a set of predefined language rules.

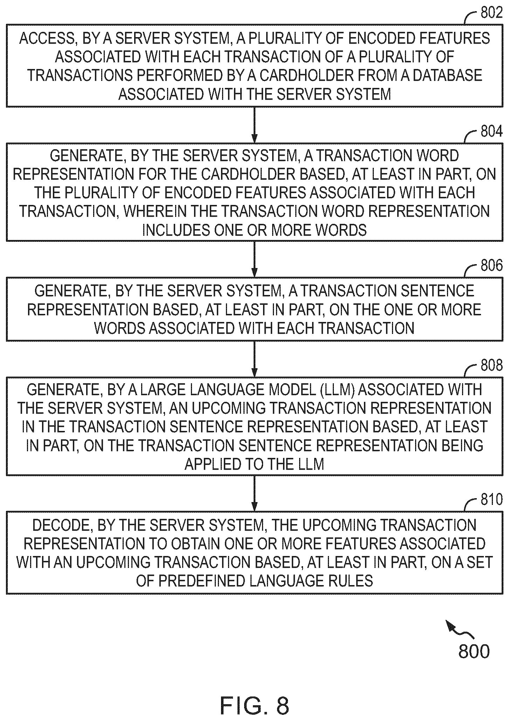

FIG. 8 illustrates a process flow diagram depicting a method 800 for predicting one or more features associated with an upcoming transaction by a cardholder (*e*.*g*., the cardholder 402(1)), in accordance with an embodiment of the present disclosure. The method 800 depicted in the flow diagram may be executed by, for example, the server system 200. The sequence of operations of the method 800 may not be necessarily executed in the same order as they are presented. Further, one or more operations may be grouped and performed in the form of a single step, or one operation may have several sub-steps that may be performed in parallel or in a sequential manner. Operations of the method 800, and combinations of operations in the method 800 may be implemented by, for example, hardware, firmware, a processor, circuitry, and/or a different device associated with the execution of software that includes one or more computer program instructions. The plurality of operations is depicted in the process flow of the method 800. The process flow starts at operation 802.

At operation 802, the method 800 includes accessing, by a server system (*e*.*g*., the server system 200), a plurality of encoded features associated with each transaction of a plurality of transactions performed by a cardholder (*e*.*g*., cardholder 402(1)) from a database (such as the database 204) associated with the server system 200.

At operation 804, the method 800 includes generating, by the server system 200, a transaction word representation for the cardholder (*e*.*g*., cardholder 402(1)) based, at least in part, on the plurality of encoded features associated with each transaction. Herein, the transaction word representation includes one or more words.

At operation 806, the method 800 includes generating, by the server system 200, a transaction sentence representation based, at least in part, on the one or more words associated with each transaction.

At operation 808, the method 800 includes generating, by a Large Language Model (LLM) (such as LLM 220) associated with the server system 200, an upcoming transaction representation in the transaction sentence representation based, at least in part, on the transaction sentence representation being applied to the LLM 220. In a non-limiting implementation, during the process of generating the upcoming transaction representation using the LLM 220, the transaction sentence representation is tokenized into a transaction token representation. This tokenization operation is already explained with reference to FIGS. 2 and 3. To that end, the same is not explained again for the sake of brevity. As may be understood, the transaction token representation includes the token sequence. Further, the LLM 220 predicts an upcoming transaction token representation in the token sequence based, at least in part, on applying the transaction token representation to the LLM 220. Later, the tokenization module 228 de-tokenizes the upcoming transaction token representation into the upcoming transaction representation.

At operation 810, the method 800 includes decoding, by the server system 200, the upcoming transaction representation to obtain one or more features associated with an upcoming transaction based, at least in part, on a set of predefined language rules.

The disclosed method with reference to FIG. 7 and FIG. 8, or one or more operations of the server system 200 may be implemented using software including computer-executable instructions stored on one or more computer-readable media (*e*.*g*., non-transitory computer-readable media, such as one or more optical media discs, volatile memory components (*e.g.,* DRAM or SRAM), or nonvolatile memory or storage components (*e.g.,* hard drives or solid-state nonvolatile memory components, such as Flash memory components) and executed on a computer (*e*.*g*., any suitable computer, such as a laptop computer, netbook, Web book, tablet computing device, smartphone, or other mobile computing devices). Such software may be executed, for example, on a single local computer or in a network environment (*e*.*g*., via the Internet, a wide-area network, a local-area network, a remote web-based server, a client-server network (such as a cloud computing network), or other such networks) using one or more network computers. Additionally, any of the intermediate or final data created and used during the implementation of the disclosed methods or systems may also be stored on one or more computer-readable media (*e*.*g*., non-transitory computer-readable media) and are considered to be within the scope of the disclosed technology. Furthermore, any of the software-based embodiments may be uploaded, downloaded, or remotely accessed through a suitable communication means. Such a suitable communication means include, for example, the Internet, the World Wide Web (WWW), an intranet, software applications, cable (including fiber optic cable), magnetic communications, electromagnetic communications (including RF, microwave, and infrared communications), electronic communications, or other such communication means.

Although the invention has been described with reference to specific exemplary embodiments, it is noted that various modifications and changes may be made to these embodiments without departing from the broad spirit and scope of the invention. For example, the various operations, blocks, *etc.,* described herein may be enabled and operated using hardware circuitry (for example, Complementary Metal Oxide Semiconductor (CMOS) based logic circuitry), firmware, software, and/or any combination of hardware, firmware, and/or software (for example, embodied in a machine-readable medium). For example, the apparatuses and methods may be embodied using transistors, logic gates, and electrical circuits (for example, Application Specific Integrated Circuit (ASIC) circuitry and/or Digital Signal Processor (DSP) circuitry).

Particularly, the server system 200 and its various components may be enabled using software and/or using transistors, logic gates, and electrical circuits (for example, integrated circuit circuitry such as ASIC circuitry). Various embodiments of the invention may include one or more computer programs stored or otherwise embodied on a computer-readable medium, wherein the computer programs are configured to cause the processor or the computer to perform one or more operations. A computer-readable medium storing, embodying, or encoded with a computer program, or similar language, may be embodied as a tangible data storage device storing one or more software programs that are configured to cause the processor or computer to perform one or more operations. Such operations may be, for example, any of the steps or operations described herein. In some embodiments, the computer programs may be stored and provided to a computer using any type of non-transitory computer-readable media. Non-transitory computer-readable media includes any type of tangible storage media.

Examples of non-transitory computer-readable media include magnetic storage media (such as floppy disks, magnetic tapes, hard disk drives, *etc*.), optical magnetic storage media (*e.g.* magneto-optical disks), Compact Disc Read-Only Memory (CD-ROM ), Compact Disc Recordable (CD-R ), compact disc rewritable (CD-R/W ), Digital Versatile Disc (DVD), BLU-RAY^{®} Disc (BD ), and semiconductor memories (such as mask ROM, programmable ROM (PROM), (erasable PROM), flash memory, Random Access Memory (RAM), *etc.).* Additionally, a tangible data storage device may be embodied as one or more volatile memory devices, one or more non-volatile memory devices, and/or a combination of one or more volatile memory devices and non-volatile memory devices. In some embodiments, the computer programs may be provided to a computer using any type of transitory computer-readable media. Examples of transitory computer-readable media include electric signals, optical signals, and electromagnetic waves. Transitory computer-readable media can provide the program to a computer via a wired communication line (*e.g.,* electric wires, and optical fibers) or a wireless communication line.

Various embodiments of the invention, as discussed above, may be practiced with steps and/or operations in a different order, and/or with hardware elements in configurations, which are different than those which, are disclosed. Therefore, although the invention has been described based on these exemplary embodiments, it is noted that certain modifications, variations, and alternative constructions may be apparent and well within the spirit and scope of the invention.

Although various exemplary embodiments of the invention are described herein in a language specific to structural features and/or methodological acts, the subject matter defined in the appended claims is not necessarily limited to the specific features or acts described above. Rather, the specific features and acts described above are disclosed as exemplary forms of implementing the claims.

## Claims

1. A computer-implemented method, comprising:
accessing, by a server system, a plurality of encoded features associated with each data point of a plurality of data points corresponding to an entity from a database associated with the server system;
generating, by the server system, a data point word representation for the entity based, at least in part, on the plurality of encoded features associated with each data point, wherein the data point word representation comprises one or more words;
generating, by the server system, a data point sentence representation based, at least in part, on the one or more words associated with each data point;
generating, by a Large Language Model (LLM) associated with the server system, an upcoming data point representation in the data point sentence representation based, at least in part, on the data point sentence representation being applied to the LLM; and
decoding, by the server system, the upcoming data point representation to obtain one or more features associated with an upcoming data point based, at least in part, on a set of predefined language rules.

2. The computer-implemented method as claimed in claim 1, wherein generating the upcoming data point representation comprises:
tokenizing, by the server system, the data point sentence representation into a data point token representation, wherein the data point token representation is a token sequence;
generating, by the LLM, an upcoming data point token in the token sequence based, at least in part, on applying the data point token representation to the LLM; and
de-tokenizing, by the server system, the upcoming data point token into the upcoming data point representation,
optionally wherein tokenizing the data point sentence representation into the data point token representation comprises:
initializing, by the server system, a tokenization process with the one or more words associated with each data point for the data point sentence representation;
computing, by the server system, a word frequency count for each word in the data point sentence representation; and
performing, by the server system, iteratively till a desired vocabulary size is achieved:
detecting most frequent pairs of consecutive words in the data point sentence representation;
merging the most frequent pairs to generate a new word within the data point sentence representation;
updating the word frequency count for the data point sentence representation; and
computing a vocabulary size based, at least in part, on a word count of the data point sentence representation.

3. The computer-implemented method as claimed in claim 1, further comprising:
accessing, by the server system, a training dataset from the database, the training dataset comprising a plurality of test data fields associated with a plurality of test data points corresponding to a plurality of entities;
generating, by the server system, a plurality of features for each entity based, at least in part, on the plurality of test data fields associated with each test data point;
encoding, by the server system, the plurality of features for each entity based, at least in part, on the set of predefined language rules;
generating, by the server system, a plurality of data point word representations for the plurality of entities based, at least in part, on the plurality of encoded features for each entity, wherein each data point word representation comprises at least one word;
generating, by the server system, a plurality of data point sentence representations based, at least in part, on the at least one word associated with each test data point of each entity, each data point sentence representation indicates a sequence of data points associated with each entity;
tokenizing, by the server system, the plurality of data point sentence representations into a plurality of data point token representations, wherein each data point token representation comprises a token sequence; and
training, by the server system, the LLM based, at least in part, on the plurality of data point sentence representations,
optionally wherein training the LLM comprises iteratively performing the following steps till predefined criteria are met:
initializing the LLM based, at least in part, on one or more hyper parameters;
determining, by the LLM, an upcoming token in the token sequence based, at least in part, on the plurality of data point sentence representations;
computing, using one or more loss functions, one or more loss values based, at least in part, on comparing the upcoming token and a ground truth token present in the training dataset; and
optimizing the one or more hyper parameters of the LLM based, at least in part, on back-propagating the one or more loss values.

4. The computer-implemented method as claimed in claim 1, wherein accessing the plurality of encoded features comprises:
accessing, by the server system, a historical tabular dataset from the database, the historical tabular dataset comprising the plurality of data points corresponding to the entity, wherein each data point is associated with a plurality of data fields;
generating, by the server system, a plurality of features for each data point based, at least in part, on the plurality of data fields associated with each data point; and
encoding, by the server system, the plurality of features of each data point based, at least in part, on the set of predefined language rules.

5. The computer-implemented method as claimed in claim 1, wherein each word is generated for each data point with the corresponding plurality of encoded features and comprises a first portion indicating a position of each of the corresponding encoded features in the word and a second portion indicating the value of each of the corresponding encoded feature, the first portion and the second portion being separated by a first special symbol, wherein different encoded features of each data point in the word are separated from each other using a second special symbol.

6. The computer-implemented method as claimed in claim 1, wherein the one or more words associated with each data point are separated from each other in the data point sentence representation using a third special symbol.

7. A computer-implemented method, comprising:
accessing, by a server system, a plurality of encoded features associated with each transaction of a plurality of transactions performed by a cardholder from a database associated with the server system;
generating, by the server system, a transaction word representation for the cardholder based, at least in part, on the plurality of encoded features associated with each transaction, wherein the transaction word representation comprises one or more words;
generating, by the server system, a transaction sentence representation based, at least in part, on the one or more words associated with each transaction;
generating, by a Large Language Model (LLM) associated with the server system, an upcoming transaction representation in the transaction sentence representation based, at least in part, on the transaction sentence representation being applied to the LLM; and
decoding, by the server system, the upcoming transaction representation to obtain one or more features associated with an upcoming transaction based, at least in part, on a set of predefined language rules.

8. The computer-implemented method as claimed in claim 7, wherein generating the upcoming transaction representation comprises:
tokenizing, by the server system, the transaction sentence representation into a transaction token representation, wherein the transaction token representation is a token sequence;
generating, by the LLM, an upcoming transaction token in the token sequence based, at least in part, on applying the transaction token representation to the LLM; and
de-tokenizing, by the server system, the upcoming transaction token into the upcoming transaction representation,
optionally wherein the server system is a payment server associated with a payment network.

9. A server system, comprising:
a communication interface;
a memory comprising executable instructions; and
a processor communicably coupled to the communication interface and the memory, the processor configured execute the executable instructions to cause the server system to at least:
access a plurality of encoded features associated with each data point of a plurality of data points corresponding to an entity from a database associated with the server system;
generate a data point word representation for the entity based, at least in part, on the plurality of encoded features associated with each data point, wherein the data point word representation comprises one or more words;
generate a data point sentence representation based, at least in part, on the one or more words associated with each data point;
generate, by a Large Language Model (LLM) associated with the server system, an upcoming data point representation in the data point sentence representation based, at least in part, on the data point sentence representation being applied to the LLM; and
decode the upcoming data point representation to obtain one or more features associated with an upcoming data point based, at least in part, on a set of predefined language rules.

10. The server system as claimed in claim 9, wherein to generate the upcoming data point representation, the server system is caused, at least in part, to:
tokenize the data point sentence representation into a data point token representation, wherein the data point token representation is a token sequence;
generate, by the LLM, an upcoming data point token in the token sequence based, at least in part, on applying the data point token representation to the LLM; and
de-tokenize the upcoming data point token into the upcoming data point representation,
optionally wherein to tokenize the data point sentence representation into the data point token representation, the server system is caused, at least in part, to:
initialize a tokenization process with the one or more words associated with each data point for the data point sentence representation;
compute a word frequency count for each word in the data point sentence representation; and
perform iteratively till a desired vocabulary size is achieved:
detecting most frequent pairs of consecutive words in the data point sentence representation;
merging the most frequent pairs to generate a new word within the data point sentence representation;
updating the word frequency count for the data point sentence representation; and
computing a vocabulary size based, at least in part, on a word count of the data point sentence representation.

11. The server system as claimed in claim 9, wherein the server system is further caused, at least in part, to:
access a training dataset from the database, the training dataset comprising a plurality of test data fields associated with a plurality of test data points corresponding to a plurality of entities;
generate a plurality of features for each entity based, at least in part, on the plurality of test data fields associated with each test data point;
encode the plurality of features for each entity based, at least in part, on the set of predefined language rules;
generate a plurality of data point word representations for the plurality of entities based, at least in part, on the plurality of encoded features for each entity, wherein each data point word representation comprises at least one word;
generate a plurality of data point sentence representations based, at least in part, on the at least one word associated with each test data point of each entity, each data point sentence representation indicates a sequence of data points associated with each entity;
tokenize the plurality of data point sentence representations into a plurality of data point token representations, wherein each data point token representation comprises a token sequence; and
train the LLM based, at least in part, on the plurality of data point sentence representations,
optionally wherein to train the LLM, the server system is caused, at least in part, to iteratively perform the following steps till predefined criteria are met:
initializing the LLM based, at least in part, on one or more hyper parameters;
determining, by the LLM, an upcoming token in the token sequence based, at least in part, on the plurality of data point sentence representations;
computing, using one or more loss functions, one or more loss values based, at least in part, on comparing the upcoming token and a ground truth token present in the training dataset; and
optimizing the one or more hyper parameters of the LLM based, at least in part, on back-propagating the one or more loss values.

12. The server system as claimed in claim 9, wherein to access the plurality of encoded features, the server system is caused, at least in part, to:
access a historical tabular dataset from the database, the historical tabular dataset comprising the plurality of data points corresponding to the entity, wherein each data point is associated with a plurality of data fields;
generate a plurality of features for each data point based, at least in part, on the plurality of data fields associated with each data point; and
encode the plurality of features of each data point based, at least in part, on the set of predefined language rules.

13. The server system as claimed in claim 9, wherein each word is generated for each data point with the corresponding plurality of encoded features and comprises a first portion indicating a position of each of the corresponding encoded features in the word and a second portion indicating the value of each of the corresponding encoded feature, the first portion and the second portion being separated by a first special symbol, wherein different encoded features of each data point in the word are separated from each other using a second special symbol.

14. The server system as claimed in claim 9, wherein the one or more words associated with each data point are separated from each other in the data point sentence representation using a third special symbol.

15. A non-transitory computer-readable storage medium comprising computer-executable instructions that, when executed by at least a processor of a server system, cause the server system to perform a method comprising:
accessing a plurality of encoded features associated with each data point of a plurality of data points corresponding to an entity from a database associated with the server system;
generating a data point word representation for the entity based, at least in part, on the plurality of encoded features associated with each data point, wherein the data point word representation comprises one or more words;
generating a data point sentence representation based, at least in part, on the one or more words associated with each data point;
generating, by a Large Language Model (LLM) associated with the server system, an upcoming data point representation in the data point sentence representation based, at least in part, on the data point sentence representation being applied to the LLM; and
decoding the upcoming data point representation to obtain one or more features associated with an upcoming data point based, at least in part, on a set of predefined language rules.
